Europäisches Patentamt

European Patent Office

Office européen des brevets

(11) Publication number: 0 375 596
A2

# EUROPEAN PATENT APPLICATION

(21) Application number: 89630231.2

(22) Date of filing: 21.12.89

(51) Int. Cl.5: B60C 11/04

(30) Priority: 21.12.88 US 287797

(43) Date of publication of application:
27.06.90 Bulletin 90/26

(84) Designated Contracting States:
DE FR GB IT

(71) Applicant: THE GOODYEAR TIRE & RUBBER
COMPANY
1144 East Market Street
Akron, Ohio 44316-0001(US)

(72) Inventor: Garbicz, Lester Anthony
3780 North Neitz Drive
Norton Ohio 44203(US)
Inventor: Schmalix, Charles Kenneth
8882 Greenmeadow N.W.
Canal Fulton Ohio 44614(US)

(74) Representative: Weyland, Joseph Jean Pierre
Goodyear Technical Center Patent
Department
L-7750 Colmar-Berg(LU)

(54) Tread for a pneumatic tire.

(57) A tread (12) for a pneumatic tire (10) featuring a lateral wide groove segment (20) extending from the tread edge (TE) to a point within 10% of the tread width from the equatorial plane (EP) of the tire. The centerline of the lateral wide groove segment (20) over 80% of its length being within a distance of a path. The distance is equal to the width of such lateral wide groove segment (20) over the aforementioned 80% of its length. The path describes a portion of a logarithmic spiral. The logarithmic spiral is described mathematically by the equation

$$X^2 + Y^2 = e^{2A\tan^{-1}(Y/X)}$$

where X is the coordinate extending in the tire's axial direction, Y is the coordinate extending in the circumferential direction of the tire. A is a constant which affects the curvature of the spiral.

FIG.1

# TREAD FOR A PNEUMATIC TIRE

## Background of the Invention

### 1. Field of the Invention

The present invention relates generally to pneumatic tires and more specifically to tires designed to provide adequate traction for a vehicle operating under wet road conditions.

### 2. Description of the Related Art

Tire tread designers have long considered traction on rain soaked roadways to be a consideration when designing tire treads. Some treads, such as that shown in United States Patent 4,700,762 to Landers, utilize a directional tread design featuring curved grooves extending from the equatorial plane of the tire to the tread edges. Some tread designs feature grooves whose location and shape are determined by mathematical formulas. For example, United States Patent 4,545,415 to Lindner et al. discloses grooves following a path determined by the following relationship:

$Y = Ax + Bx^2 + Cx^3 + D$

wherein: A = - 0.44, B = - 0.048, C = - 0.095, D = - 0.025, x is the distance along the circumference of the tire where the groove meets the mid-circumferential centerplane (equatorial plane) of the tire and Y is the distance from where the groove crosses the mid-circumferential centerplane axially outward thereof to a point on the path measured perpendicular to the mid-circumferential centerplane. Additionally, United States Patent 4,057,089 to Johannsen discloses a tire tread the grooves of which follow the curvature of a second order parabola.

Long known in mathematics is an unusual and significant relationship involving a series called the Fibonacci numbers. The Fibonacci numbers were first discovered by Leonardo of Pisa nearly 800 years ago. Through the use of Fibonacci numbers, a particular type of logarithmic spiral can be constructed. Such a spiral is called a "golden spiral" or a "Fibonacci spiral". These spirals are common in nature and can be seen in such everyday items as pine cones, sunflowers, pineapples, nautilus shells, or the horns of a big horn sheep. These spirals and numerical relationships have been published, for example in Fascinating Fibonaccis - Mystery and Magic in Numbers by Trudi Hammel Garland, published in 1987 by Dale Seymour Publications, Palo Alto, California.

This invention concerns the application of this naturally occurring mathematical relationship to the tread pattern of a pneumatic tire.

### 3. Summary of the Invention

In a tire according to the present invention, a tread for a pneumatic tire has a plurality of lateral wide groove segments extending from the tread edge to a point within 10% of the tread width from the equatorial plane of the tire. The centerline of each lateral wide groove segment over a contiguous 80% of its length being within a distance of a path. The distance is equal to the width of such lateral wide groove segment over the aforementioned 80% of its length. The path describes a portion of a logarithmic spiral. The spiral is described mathematically by the equation

$$X^2 + Y^2 = e^{2A\tan^{-1}(Y/X)}$$

where X is the coordinate extending in the tire's axial direction, Y is the coordinate extending in the circumferential direction of the tire and A is a constant which affects the curvature of the spiral.

### 4. Brief Description of the Drawings

Other aspects of the invention will become apparent from the following description when read in conjunction with the accompanying drawings wherein:

Figure 1 is a perspective view of a tread showing one embodiment of the subject invention;

Figure 2 is a front view of the tread illustrated in Figure 1;

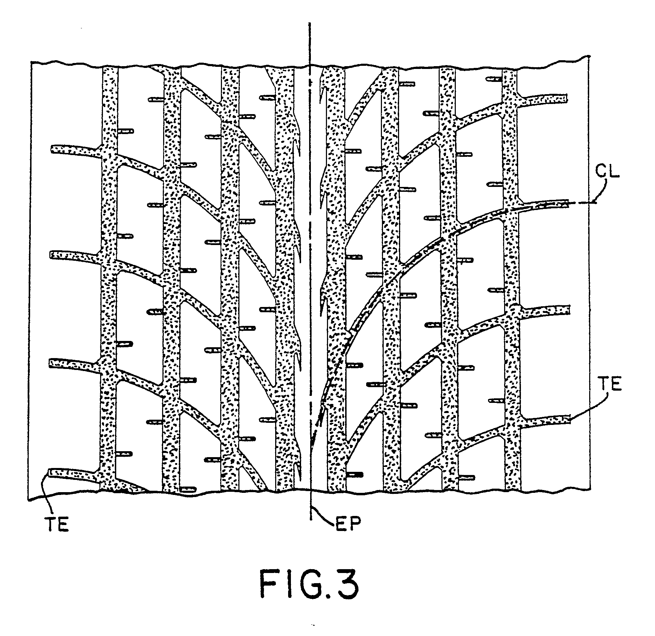

Figure 3 is a plan view of a portion of the tread illustrated in Figure 1;

Figure 4 is a diagram depicting a "Fibonacci" or "golden" spiral drawn through the use of rectangles exhibiting the Fibonacci relationship;

Figure 5 is a schematic plan view of a portion of the tread illustrated in Figure 1 and illustrates two "Fibonacci spirals" arranged so that the radius of curvature of the spiral decreases as the curve moves from the equatorial plane of the tire to the tread edge;

Figure 6 is a schematic plan view of a portion of the tread illustrated in Figure 1 shown with two "Fibonacci spirals" arranged so that the radius of curvature of the spiral increases as the curve moves from the equatorial plane of the tire to the tread edge;

Figure 7 is a cross-sectional view of one half of a tread according to the present invention enlarged so that the convex surfaces of the blocks are more visible; and

Figure 8 is a schematic diagram illustrating a path describing a logarithmic spiral, a groove, groove width, and other terms used in the specification and claims.

5. Detected Description of the Preferred Embodiment

The invention also may be better understood in the context of the following definitions, which are applicable to both the specification and the appended claims.

"Axial" and "axially" are used herein to refer to lines or directions that are parallel to the axis of rotation of the tire.

"Equatorial plane (EP)" means the plane perpendicular to the tire's axis of rotation and passing through the center of its tread.

"Groove" means an elongated void area in a tread that may extend circumferentially or laterally about the tread in a straight, curved, or zig-zag manner. Circumferentially and laterally extending grooves sometimes have common portions. A "wide groove" has a width between 1% and 5% of the tread width. The "groove width" is equal to tread surface area occupied by a groove or groove portion, the width of which is in question, divided by the length of such groove or groove portion; thus, the groove width is its average width over its length. Grooves may be of varying depths in a tire. The depth of a groove may vary around the circumference of the tread, or the depth of one groove may be constant but vary from the depth of another groove in the tire. If such wide grooves are of substantially reduced depth as compared to wide circumferential grooves which they interconnect, they are regarded as forming "tie bars" tending to maintain a rib-like character in the tread region involved. "Groove length" means the distance measured along the centerline of the groove or groove segment between the two points of interest.

"Centerline of the groove" or "groove centerline" means that line in the groove that is equidistant from each groove wall.

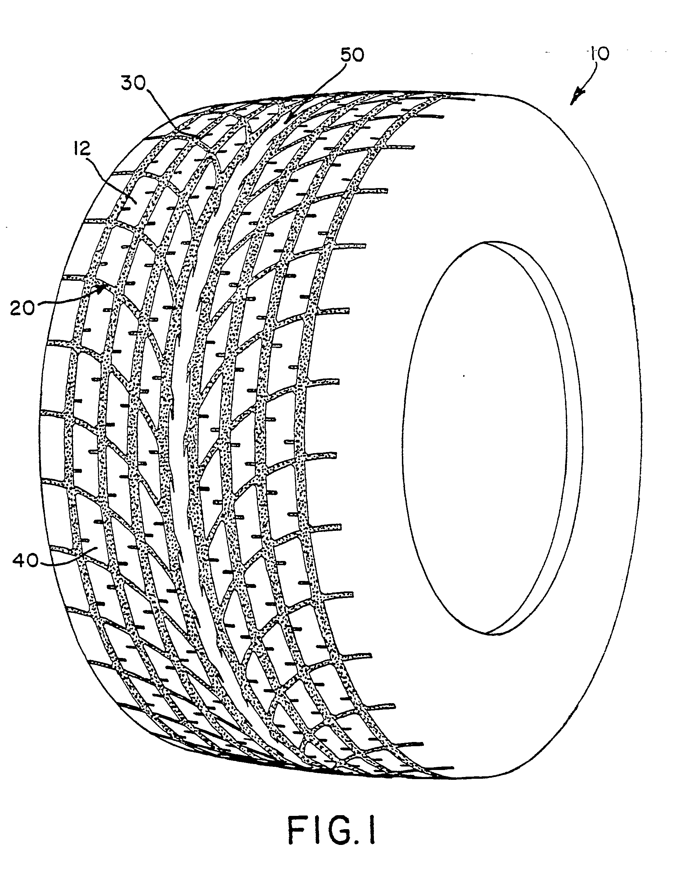

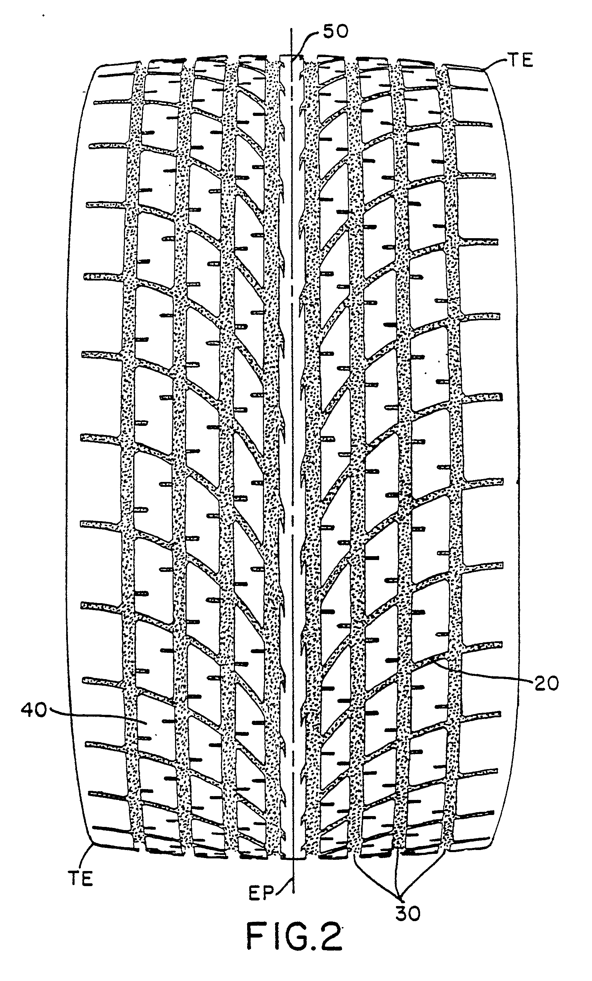

In the drawings, the same numerals are used for the same components or items in the several views. With particular reference now to Figures 1 and 2, there is illustrated a pneumatic tire 10.

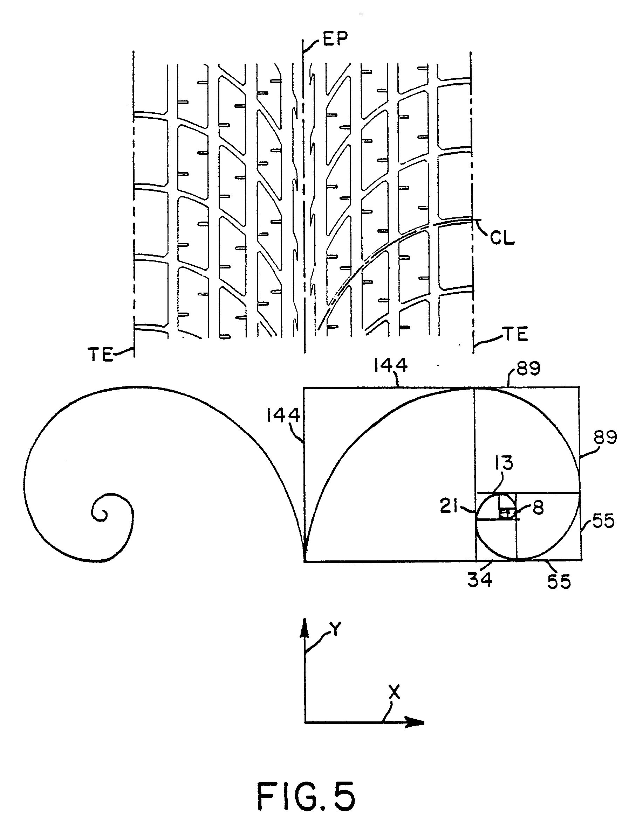

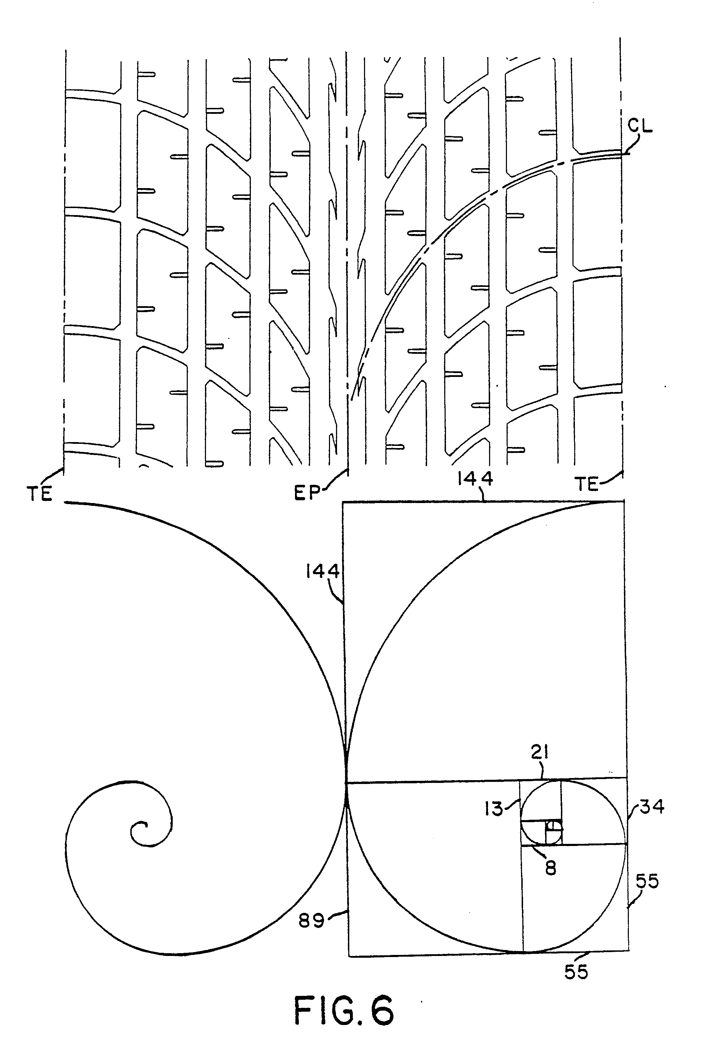

The tire 10 has tread 12 incorporating the present invention. The tread 12 is characterized by lateral wide groove segments 20. The lateral wide groove segments extend from the tread edge (TE) to a point within 10% of the tread width from the equatorial plane (EP) of the tire. As best seen in Figure 5 or Figure 6, the centerline (CL) of the lateral wide groove segments follows a path describing a portion of a logarithmic spiral.

A logarithmic, or equiangular, spiral is described mathematically by the equation

$$X^2 + Y^2 = e^{2A\tan^{-1}(Y/X)}$$

where X is the coordinate extending in the tire's axial direction, Y is the coordinate extending parallel to the tire's equatorial plane and A is a constant which effects the curvature of the spiral.

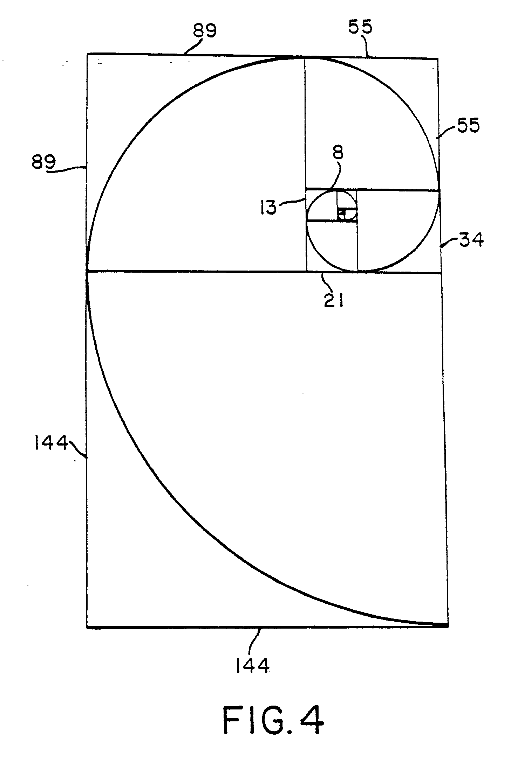

The equation defining a logarithmic spiral has two variables (X and Y) and therefore can easily be represented in two dimensions, as shown in Figure 4. Because most tires, including the preferred embodiment, feature a convexly curved tread arc from tread edge to tread edge and because of the necessary circumferential curvature, an actual groove in the tread will follow a three dimensional path. The transition of a groove from a two dimensional path as described by the above equation to a three dimensional tire tread is accomplished by mapping the two dimensional path onto the tire tread. Points on a flat, two dimensional drawing of a logarithmic spiral are mapped, or related to, corresponding points on the three dimensional tread surface.

This process takes into account the fact that the convexly curved tread arc causes the tire circumference at the equatorial plane to be larger than the circumference at the tread edge or any point therebetween. This process can be understood by imagining a long, narrow sheet of paper on which are drawn tread grooves according to the invention. This "ribbon" of paper is wrapped circumferentially around a tire so that the longest dimension extends circumferentially. Because the tire circumference at the tread edge is less than at the equatorial plane, the edges of the ribbon will extend radially outwardly of the tread edges of the tire. It is this difference which is accounted for by mapping. The distance between two points on the path in the two dimensional, paper drawing are "mapped" or reduced in circumferential spacing so as to properly fit onto the tread surface, which is at a lower circumference at points other than the equatorial plane. This reduction in circumferential spacing is made by multiplying the circumferential spacing of points on the two dimensional sheet of paper by a ratio. The ratio is equal to the circumference of the tire at the lateral position of interest divided by the circumference of the tire at the equatorial plane.

The centerline (CL) of the lateral wide groove segments 20 may follow a spiral so that the spiral's radius of curvature decreases from the equatorial plane to the tread edge. This preferred embodiment is shown in Figure 5. In another embodiment, shown in Figure 6, the radius of curvature of the centerline of the lateral wide groove segments increases from the equatorial plane of the tire to the tread edge.

In the preferred embodiment, the centerline of the wide lateral groove segments 20 follows a path described by the "golden" spiral or "Fibonacci" spiral. Referring to Figure 4, there is illustrated a Fibonacci spiral. A Fibonacci spiral is one of an infinite number of logarithmic spirals. In a Fibonacci spiral, the variable A is equal to approximately 0.30635. The Fibonacci spiral can be easily approximated by the use of Fibonacci rectangles. The lengths and widths of Fibonacci rectangles are related by the Fibonacci ratio 0.618034, or its inverse 1.618034. The Fibonacci ratio can be obtained from a number sequence constructed by adding the previous two numbers in the sequence to obtain the next number. For example the first twelve Fibonacci numbers are 1, 1, 2, 3, 5, 8, 13, 21, 34, 55, 89, and 144. As the numbers get larger, the ratio between adjacent numbers approaches 0.618034.

A variety of natural occurring phenomena and designs in nature follow a pattern described by the Fibonacci sequence. The Fibonacci spiral is one of these naturally occurring phenomena. For example the Fibonacci spiral can be found in palm tree trunks, pine cones, pineapples, sunflowers, artichokes, chambered nautilus shells, and the horns of big horn sheep.

A Fibonacci spiral is easily constructed by using Fibonacci rectangles. As shown in Figure 4, the construction of a Fibonacci spiral begins with a one unit square. A second one unit square is attached to it by making any of the sides coincident. Next a two unit square is attached to the two one unit squares where it fits. Next a three unit square is attached where it fits. Next a five unit square is attached where it fits. Next an eight unit square, next thirteen, next twenty-one, next thirty-four, and then fifty-five, eighty-nine, one hundred forty-four, and so on. A Fibonacci spiral is approximated by drawing quarter-circle arcs connecting opposite corners of the squares in such a way that the arcs connect sequentially.

In the preferred embodiment, the centerline (CL) of the lateral wide groove segments 20 is tangent to the equatorial plane (EP) of the tire and parallel to the tire's axis of rotation at the tread edge (TE). In the preferred embodiment, circumferential wide grooves 30 extend parallel to the equatorial plane of the tire and intersect the lateral wide groove segments to form blocks 40. The circumferential wide grooves aid in wet traction and in providing a pleasing appearance. In the preferred embodiment, a rib 50 extends circumferentially about the tire at the equatorial plane.

In the preferred embodiment, the width of the lateral wide groove segments is constant from the equatorial plane to the tread edge.

In another embodiment, the width of the lateral wide groove segments 20 may vary from the equatorial plane of the tire to the tread edge. Depending on the application, the width of the lateral wide groove segments may be wider near the equatorial plane of the tire or near the tread edge. If the width is wider near the equatorial plane of the tire, the tire will be better able to absorb water near the centerline of the tire since the blocks will squeeze the water into the wide grooves where it will be encapsulated, allowing the surface of the block to maintain contact with the road surface and provide good traction. If the groove is wider near the tread edge, this could contribute to good water flow from the center portions of the tire to the tread edge, similar to a tributary system of a river. In a preferred embodiment, the width of the lateral wide groove segments increase from the equatorial plane to the tread edge and each groove wall of the lateral wide groove segments follows a spiral path defined by an equiangular spiral. This is accomplished by varying the value of the constant A for each groove wall.

Ideally, the centerline of the lateral wide groove segments will follow the path described mathematically by the equation noted previously. However, real-world manufacturing concerns require approximations to produce tire molds in a cost-effective manner. In a true logarithmic spiral, the radius of curvature of the spiral is continuously varying. This is difficult and expensive to manufacture. In a manufacturing environment approximations are appropriately made. It is intended that lateral wide groove segments which approximate the logarithmic or Fibonacci spiral are within the scope of this invention. In the current invention, the spiral was approximated by four constant radius arcs whose centers were located midway between pairs of adjacent circumferentially extending wide grooves.

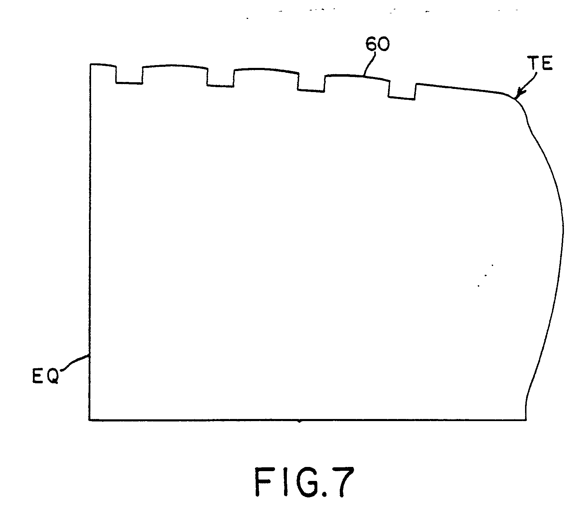

In the preferred embodiment, the ground-engaging surface 60 of the blocks is convex as shown in Figure 7, and described in United States Patent No. 4,722,378. The convex shape of the surface aids in pushing water into the tread grooves and enabling the surface of the block to grip the road surface.

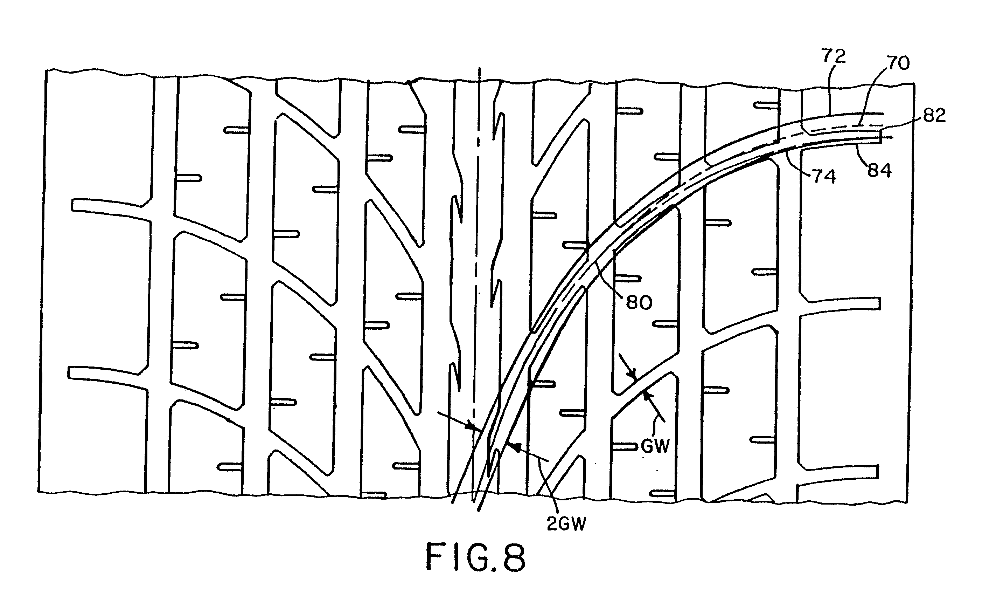

Other treads which are considered within the scope of the invention but which deviate from the path of a logarithmic spiral are those with centerlines of lateral wide groove segments which, over a contiguous 80% of their lengths, are within a distance of a path describing a logarithmic or Fibonacci spiral. Such distance is equal to the width of such lateral wide groove segment over the aforementioned 80% of the length of the lateral wide groove segment. In Figure 8, this distance is designated GW, for "groove width". The centerline of the path which describes a portion of a logarithmic spiral is designated 70. A zone around the path centerline is bounded by lines 72 and 74. These lines are displaced from the path centerline by a distance equal to one groove width. The groove is defined by lines 82 and 84, therefore one groove width is equal to the tread surface area between lines 82 and 84 divided by the length in question. Line 80 designates the centerline of the groove. The groove shown in Figure 8 is considered within the scope of the invention since the groove centerline 80, over at least a contiguous 80% of its length, is within one groove width GW of the path centerline 70.

Other deviations from the path of a logarithmic spiral may result from pitching the tire's tread elements. Pitching is a technique used to reduce tire noise and involves altering the circumferential lengths of the tread elements according (to??????) a pattern. Altering the circumferential lengths of the tread elements may affect the shape of the groove.

## Claims

1. A tread for a pneumatic tire, the tread when on the casing characterized by:
a plurality of lateral wide groove segments extending from the tread edge to a point within 10% of the tread width from the equatorial plane, the centerline of each lateral wide groove segment over a contiguous 80% of its length being within a distance of a path, the distance being equal to the width of such lateral wide groove segment over the aforementioned 80% of its length, the path describing a portion of a logarithmic spiral and being described mathematically by the equation

$$X^2 + Y^2 = e^{2A\tan^{-1}(Y/X)}$$

where X is the coordinate extending in the tire's axial direction, Y is the coordinate extending in the circumferential direction of the tire and A is a constant which affects the curvature of the spiral.

2. A tread as described in Claim 1 characterized by A being between 0.2 and 0.4.

3. A tread as described in Claim 2 characterized by A being equal to 0.30635 and the logarithmic spiral defined by the equation being described by Fibonacci ratios.

4. A tread as described in Claim 3 characterized by the centerline of the lateral wide groove segments being tangent to the equatorial plane of the tire.

5. A tread as described in Claim 4 characterized by the centerline of the lateral wide groove segments at the tread edge being parallel to the tire's axis of rotation.

6. A tread as described in Claim 5 characterized by further comprising circumferential wide grooves, the circumferential wide grooves being parallel to the equatorial plane, the circumferential wide grooves intersecting the lateral wide groove segments to form blocks.

7. A tread as described in Claim 6 characterized by comprising a rib extending circumferentially about the tire at the equatorial plane.

8. A tread as described in Claim 7 characterized by the spiral's radius of curvature decreasing from the equatorial plane to the tread edge.

9. A tread as described in Claim 8 characterized by the width of the lateral wide groove segments increasing from the equatorial plane to the tread edge.

10. A tread as described in Claim 9 characterized by each groove wall of the lateral wide groove segments following a spiral path defined mathematically by the spiral of Claim 2.

FIG.1

FIG.2

FIG.3

FIG.4

FIG.5

FIG.6

FIG.7

FIG.8

EP 0 375 596 A2